# EUROPEAN PATENT APPLICATION

(11) **EP 1 976 140 A1**
(43) Date of publication of application: **01.10.2008**
(21) Application number: 07006190.8
(22) Date of filing: 26.03.2007
(51) Int. Cl.: H04B 7/005, H04B 1/04

(54) **Method and device for reducing transmission power of packet oriented data and communication system comprising such device**

(71) Applicant: Nokia Siemens Networks GmbH & Co. KG, 81541 München (DE)
(72) Inventor: Ahrndt, Thomas, 85521 Ottobrunn (DE); Kozek, Werner, 1220 Wien (AT); Bianchi, Roberto, 91054 Erlangen (DE); Schnitter, Matthias, 80689 München (DE)

(57) **Abstract**

A method and a device for transmitting packet oriented data are provided, said packet oriented data comprising information data and idle data, wherein said idle data comprising at least one symbol of lower amplitude.

## Description

The invention relates to a method and a device for processing packet oriented data and to a communication system comprising such device.

Current standards for digital subscriber line transmission such as ADSL, HDSL, VDSL, ADSL2/ADSL2+ or VDSL2 follow largely a traditional "leased line philosophy" in the sense that after an initial synchronization procedure a high bit rate connection is running 24 hours a day independent whether there is payload demand by the user or not.

A packet data of the all-IP services (WWW access, VoIP, IPTV, FTP, etc.) is encapsulated into constant bit rate service. A mechanism for rate adaptation in ADSL2, VDSL2 is slow and based on complicated negotiations between both sides.

In ADSL2/2+ adaptation of transmission power is achieved by a so-called "L2-mode" that allows to reduce the power for transmission when the required payload data rate falls below a predetermined threshold.

However, the L2-mode needs to run a protocol between an ATU-C, i.e. an ADSL-modem in the central office (CO), and an ATU-R, i.e. a remote modem within the premises of the subscriber. Both, ATU-C and ATU-R need to negotiate terms, in particular a start and an end, of an L2-mode session. This leads to a certain complexity within both devices ATU-C and ATU-R. In addition, switching-on as well as switching-off the L2-mode is slowed down by such negotiation proceedings.

Another important disadvantage of the existing L2-mode is the fact that the actual change in transmission signal amplitude takes place in an abrupt manner, i.e. a high power DMT-symbol is directly followed by a low power DMT-symbol. This in turn leads to an abrupt change in background noise and thus potential instabilities for other services on the same cable binder.

The **object** to be solved is to overcome the disadvantages as stated before and to provide an efficient solution to reduce transmission power.

This problem is solved according to the features of the independent claims. Further embodiments result from the depending claims.

In order to overcome this problem a method for transmitting packet oriented data is provided, said packet oriented data comprising information data and idle data, wherein said idle data comprises at least one symbol of low amplitude

The information data can be information data frames and/or the idle data can be idle data frames.

A symbol of low amplitude may be a symbol of deviated or reduced amplitude and/or deviated reduced power and/or spectral and/or temporal distribution in particular of a transmission signal.

The information data frames and/or the idle data frames may be encapsulated within the packet oriented data that is transmitted from a sender to a receiver.

This approach bears the advantage that idle data frames can be modified such that symbols of low amplitude or other preferred spectral and/or temporal properties are transmitted. Spectral and/or temporal patterns may be achieved by manipulation of encapsulated idle pattern on transmitter side without any necessity of negotiation between sender and receiver.

In an embodiment, the idle data (frame) is sent from or initiated by a second layer. This idle data (frame) leads to at least one symbol of low amplitude, e.g., of preferred spectral and/or temporal behavior to be transmitted via a first layer.

In a further embodiment, the second layer can be a layer above the first layer.

Advantageously the first layer can be a Layer 1, i.e. a layer comprising a transport layer functionality according to the OSI-reference model. It is to be noted that the second layer referred to herein, does not necessarily have to be Layer2 and/or does not have to comprise a Layer 2 functionality according to the OSI-reference model (only). The second layer herein can be a layer above the first layer, i.e. it may as well be a Layer3 or comprise a Layer 3 functionality according to the OSI-reference model. Further, the second layer can be a Layer4, Layer5, etc. or comprise an according functionality as stated in the OSI-reference model. In other words, the first layer and the second layer according to the approach presented herewith are not restricted to a particular layer of any well known model and/or are not limited to the second layer being immediately arranged above the first layer.

The second layer may realize a cross-layer functionality by initiating idle data frame that preferably results in a particular shape of data transmitted by the first layer to a receiver.

It is to be noted that the second layer and the first layer can be realized within different components of a communication network. Hence, both first and second layer do not have to be on the same piece of hardware or be part of the same piece of software.

In another embodiment, the at least one symbol of low amplitude is based on at least one constellation in a constellation diagram, said at least one constellation resulting in a low transmitting energy. According to a constellation diagram, several constellations can be chosen to represent symbols (i.e. bit sequences) to be transmitted. In order to meet a low transmission energy of the idle data, preferably such constellations of low amplitude are sent.

Advantageously, the symbols chosen to be sent as idle information are selected such that they are rejected by a receiver. This can be achieved by transmitting idle data that does not meet syntax requirements of a receiver, e.g. of a particular layer on the receiving side. If data packets arrive at the receiver that cannot be understood or successfully analyzed, these data packets may be disregarded. Hence, idle data transmitted corresponds to data packets to be disregarded. According to this example, idle data serves a reduction of the transmitting power and does not comprise useful information to be decoded on the receiving side. Thus, such idle data received could be discarded by said receiver.

In yet another embodiment, the at least one symbol of low amplitude corresponds to a rotating symbol in a constellation diagram.

As constellations in a constellation diagram are preferably arranged symmetrically or around the origin of the constellation plane, there may be several constellations representing symbols of low amplitude that can be selected for transmitting idle data. This selection can be done in a rotating manner around the origin of the constellation diagram thereby leading to symbols of low amplitude to be transmitted reducing an overall interference and/or noise.

As a further embodiment, these several constellations of low amplitude may be selected according to a hopping pattern. Such pattern can follow a predetermined order or it can be (semi-)randomly. Such selection may lead to an interference and/or noise cancellation.

It is also an embodiment that the at least one symbol of low amplitude comprises several symbols of one constellation that may be transmitted according to a predetermined sequence. Such approach could be used to reduce interference on the receiving side by averaging a remaining interference across several symbols and then subtracting such interference evaluated.

In a embodiment, the receiver distinguishes information data and idle data in order to improve a recognition of said information data transmitted.

This approach also allows the receiver to be modified for better interference cancellation purposes. Hence, the idle data can be used by the receiver to evaluate interference of the packet oriented data transmitted and hence cancel (a portion of) interference of the information data.

In yet another embodiment, the at least one symbol of low amplitude is transmitted when the amount of information data (to be) transmitted reaches and/or falls below a predetermined threshold.

This allows the transmitting power to be reduced immediately as soon as the threshold is reached, i.e. if the amount of information data transmitted falls below a predetermined value.

Also, it is an embodiment that the packet oriented data is transmitted via
- Quadrature amplitude modulation (QAM);
- Amplitude shift keying (ASK);
- Phase shift keying (PSK);
- Frequency shift keying (FSK);
- Gaussian Minimum Shift Keying (GMSK);
- an arbitrary orthogonal signaling.

The problem stated supra is also solved by a device for transmitting packet oriented data comprising a processor unit that is arranged and/or equipped such that the method as described herein is executable or can be run on said processor. Such processor unit may comprise an FPGA and/or an EPLD and/or an ASIC used in particular to compute the idle pattern necessary to obtain the required spectral or temporal behavior of the transmission signal.

In an embodiment, the device is a communication device, in particular a transmitter and/or sender of or within a communication network.

The problem stated supra is additionally solved by a device for receiving packet oriented data, said packet oriented data comprising information data and idle data, wherein said idle data comprises at least one symbol of low amplitude, wherein the device determines an interference based on the at least one symbol of low amplitude received.

Such device can be a receiver of or within a communication system.

Further, the problem stated above is solved by a communication system comprising at least one of the devices as described herein.

The approach described herein may be used in combination with DSL-Technologies, e.g., ADSL, ADSL2, ADSL2+ or VDSL.

Embodiments of the invention are shown and illustrated in the following figures:
- Fig.1: shows a diagram of information data and idle data sent from a sender to a receiver;

- Fig.2: shows a constellation diagram comprising several symbols that may be used for 16QAM.

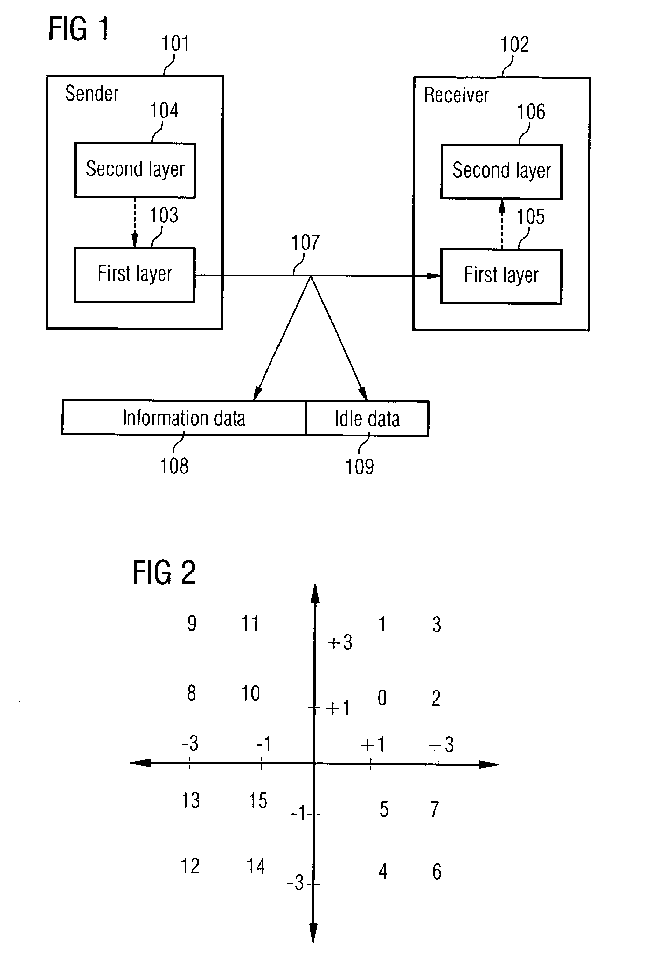

It is an object of the approach presented herewith to reduce the overall transmitting power of packet oriented data sent from a sender 101 to a receiver 102 according to **Fig.1**. The sender 101 comprises a first layer 103 and a second layer 104, the receiver 102 comprises a first layer 105 and a second layer 106. Packet oriented data is sent via a connection 107 between the first layer 103 of the sender 101 and the first layer 105 of the receiver 102.

The second layer 104 and the first layer 103 are connected via a dashed line indicating that the second layer 104 is located (logically) above the first layer 103. It is, however, also possible that additional functions or layers are arranged between the second layer 104 and the first layer 103, i.e. there has to be no immediate connection between the second layer 104 and the first layer 103.

It is an alternative that the first layer 103 and the second layer 104 are arranged on separate entities or units within a network.

The same applies to the first layer 105 and the second layer 106 on the receiving side.

Said packet oriented data 107 may comprise information data 108, i.e. useful data to be sent from the sender 101 to the receiver 102, and idle data 109, basically containing no user information. Working to full capacity may imply that merely information data 108 is sent from the first layer 103 to the first layer 105 and substantially no idle data 109 is present in such case.

However, in scenarios of reduced capacity, idle data 109 is sent which does not contain information but due to its idle pattern also consumes a significant amount of power.

In such case, the approach presented herewith allows to transmit idle data 109 comprising at least one symbol of low amplitude. In particular, the idle data 109 may comprise symbols of substantially low amplitude only. As the overall transmitting power is the result of the information data 108 transmitted and the idle data 109 transmitted, reducing the power necessary for transmitting said idle data 109 results in a reduced overall transmitting power.

The overall signal transmitted from the first layer 103 to the first layer 105 comprises a summation of several carriers in the frequency domain that are individually QAM-modulated.

**Fig.2** shows a constellation diagram of a 16QAM system. Each constellation, i.e. point in the x-y-plane represents a pre-defined bit-pattern, referred to as symbol. In Fig.2, constellations for symbols 0, 5, 10 and 15 show a smaller amplitude than the remaining constellations and hence lead to a reduced transmitting power.

In order to send idle data frame 109 with reduced transmitting power, the second layer 104 needs to set up data packets that result in constellations of low amplitude as shown in Fig.2. As a layer above the first layer 103, here the second layer 104, does not directly control the constellations to be chosen for transmitting information between the first layer 103 and the first layer 105, a mapping table may be used to enable the second layer 104 to select messages that result in such constellations of low amplitude. Any such mapping could be evaluated offline prior to sending idle data 109.

It is to be noted that such idle data initiated by the second layer 104 preferably results in the receiver 102 discarding such idle data received. As this kind of idle data only tries to reduce the overall transmitting power, it may not contain any useful data to be analyzed or processed by the receiver. Instead, such data should preferably not be run through all layers of the receiver 102, but to be discarded as soon as possible to avoid unnecessary processing overhead.

As an alternative, the receiver 102 may use idle data 109 to reduce interference. Therefore, pre-defined idle data patterns could be defined that allow the receiver to evaluated interference and/or signal-to-noise ratio based on the signals received at the first layer 105. This may improve the overall reception quality.

It is an alternative to provide a threshold for the amount of information data sent from the first layer 103 to the first layer 105. If the information data falls below said threshold, the cross-layer transmitting power reduction as described is started initiating idle data 109 of low amplitude to be sent by the first layer 103.

## Claims

1. A method for transmitting packet oriented data, said packet oriented data comprising information data and idle data, wherein said idle data comprises at least one symbol of low amplitude.

2. The method according to claim 1, wherein said idle data is sent from a second layer, said idle data leading to at least one symbol of low amplitude to be transmitted via a first layer.

3. The method according to claim 2, wherein the second layer is a layer above the first layer.

4. The method according to any of the previous claims, wherein the at least one symbol of low amplitude is based on at least one constellation in a constellation diagram, said at least one constellation resulting in a low transmission energy.

5. The method according to any of the previous claims, wherein said at least one symbol of low amplitude corresponds to a rotating symbol in a constellation diagram.

6. The method according to any of the previous claims, wherein said at least one symbol of low amplitude is selected according to a hopping pattern.

7. The method according to any of the previous claims, wherein said at least one symbol of low amplitude comprises several symbols of one constellation.

8. The method according to any of the previous claims, wherein a receiver determines an interference based on the at least one symbol of low amplitude transmitted.

9. The method according to any of claims 1 to 7, wherein a receiver distinguishes information data and idle data in order to improve a recognition of said information data transmitted.

10. The method according to any of the previous claims, wherein the at least one symbol of low amplitude is transmitted when the amount of information data transmitted reaches and/or falls below a predetermined threshold.

11. The method according to any of the previous claims, wherein the packet oriented data is transmitted via
- Quadrature amplitude modulation (QAM);
- Amplitude shift keying (ASK);
- Phase shift keying (PSK);
- Frequency shift keying (FSK);
- Gaussian Minimum Shift Keying (GMSK);
- an arbitrary orthogonal signaling.

12. A device for transmitting packet oriented data comprising a processor unit that is arranged such that the method according of any of the preceding claims is executable on said processor.

13. The device according to claim 12, wherein said device is a communication device, in particular a transmitter or sender within a communication network.

14. A device for receiving packet oriented data, said packet oriented data comprising information data and idle data, wherein said idle data comprises at least one symbol of low amplitude, wherein the device determines an interference based on the at least one symbol of low amplitude received.

15. Communication system comprising at least one of the devices according to any of claims 12 to 14.
